Europäisches Patentamt

European Patent Office

Office européen des brevets

(19)

(11) Publication number: **0 068 267**
**A1**

# EUROPEAN PATENT APPLICATION

(12)

(21) Application number: **82105193.5**

(22) Date of filing: **14.06.82**

(51) Int. Cl.³: **D 06 F 33/02,** A 47 L 15/46, G 05 B 23/02

(30) Priority: **18.06.81 IT 6784081**

(43) Date of publication of application: **05.01.83**
**Bulletin 83/1**

(84) Designated Contracting States: **DE FR GB NL SE**

(71) Applicant: **INDESIT INDUSTRIA ELETTRODOMESTICI ITALIANA S.p.A., Str. Piossasco Km 17, I-10040 Rivalta Turin (IT)**

(72) Inventor: **Di Chiara, Enrico, Viale Kennedy 41, I-10015 Ivrea (Torino) (IT)**

(74) Representative: **Prato, Roberto et al, c/o Ingg. Carlo e Mario Torta Via Viotti 9, I-10121 Torino (IT)**

(54) Device for measuring at least one operating parameter on a household appliance with automatic operating control of the device.

(57) A device for measuring at least one operating parameter on a household appliance is described; the main feature of the device is the fact that it comprises first means (87, 83, 86, 81; 34, 35, 36) for detecting the said parameter within a given preset range and second means (65) for detecting a sequence of indications picked up within the said preset range for so detecting a possible breakdown on the said device.

EP 0 068 267 A1

- 1 -

DEVICE FOR MEASURING AT LEAST ONE OPERATING PARAMETER ON
A HOUSEHOLD APPLIANCE WITH AUTOMATIC OPERATING CONTROL OF
THE DEVICE"

The present invention relates to a discreet-value measuring
device for measuring at least one operating parameter, i.e.
water temperature and/or level, on a household appliance,
in particular, a washing machine with automatic operating
control of the measuring device.
We are already familiar with household appliances, e.g. washing machines, controlled by a microprocessor which regulates
the operating cycles on the machine as well as detecting various operating parameters, such as water temperature, level,
etc. The values of these parameters are detected by measuring devices which, for example, detect when the parameter is
above or below a preset threshold, which may be varied (as
in the case of water temperature) or a signal produced by the
closing of a switch (for example, when the water reaches the
required level). Instead of providing for greater reliability of the said household appliances and specific indication
of operating defects, however, the system of detection described above may even be misleading if a fault occurs on the
measuring device itself and is not detected immediately.

The aim of the present invention is to provide a device for measuring at least one operating parameter on a household appliance which overcomes the above drawbacks, i.e. which automatically detects an operating defect on the measuring device itself and not only informs the operator of the defect but also specifies the type of defect involved.

With this aim in view, the present invention relates to a device for measuring at least one operating parameter on a household appliance, characterised by the fact that it comprises first means for detecting the said parameter within a given preset range and second means for detecting a sequence of indications picked up within the said preset range for so detecting a possible breakdown on the said device.

The device will now be described in detail, by way of a non-limiting example, with reference to the attached drawings in which :

- Fig. 1 shows a block diagram of a household appliance comprising the measuring device covered by the present invention;

- Fig. 2 shows a circuit diagram of one block on the Fig. 1 appliance;

- Fig. 3 shows a control panel on the Fig. 1 appliance;

- Fig. 4 shows an operating block diagram of the measuring device on the Fig. 1 appliance;

- Figs 5 and 6 show operating graphs of the measuring device covered by the present invention;

- Fig. 7 shows other operating blocks on the measuring device covered by the present invention;

- 3 -

0068267

— Fig. 8 shows operating blocks on the Fig. 1 household appliance.

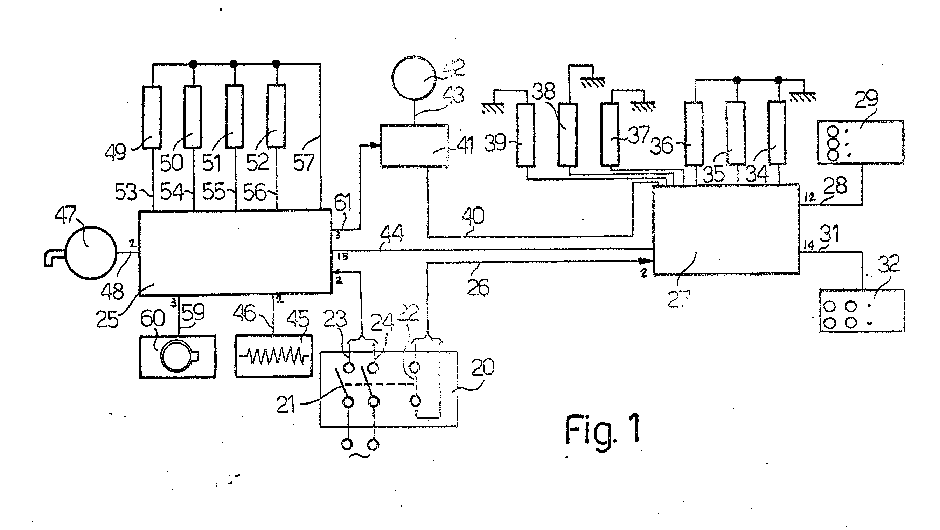

Fig. 1 shows a block diagram of the household appliance, in this case a washing machine, fitted with the measuring device covered by the present invention. The household appliance is the same described in patent application N° 67839-A/81 filed by the present applicant of which only the parts considered necessary, i.e. specifically connected with the present measuring device, will be referred to here.

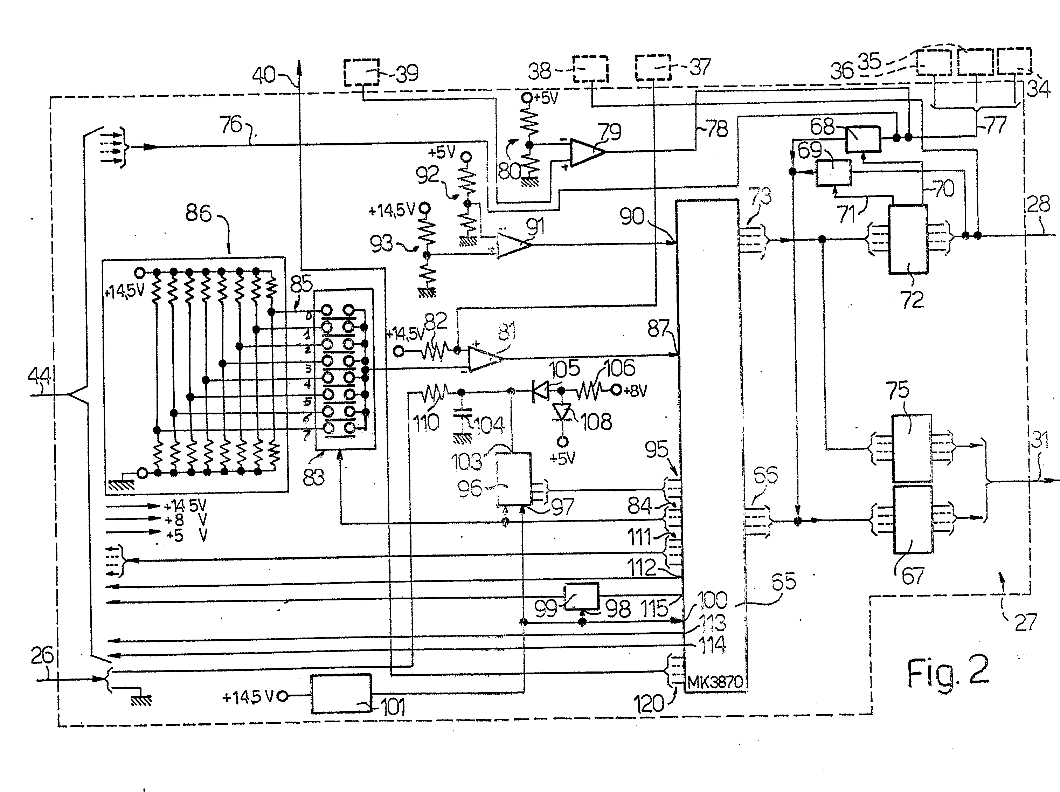

The aforementioned household appliance comprises an on/off switch (20) itself comprising a double switch (21) connected mechanically to a single switch (22). Double switch 21 is con nected to the a.c. mains supply of two supply wires (23, 24) which are connected to the supply of power control unit 25. The multi-wire electric connecting lines in the Fig. 1 diagram have the number of connections shown next to them. Switch 22 is series connected to two-wire line 26 which is connected to control logic block 27 and which will be described in detail when we get to Fig. 2. Block 27 is connected, over twelve-connection line 28, to button panel block 29 and, over fourteen-connection line 31, to block 32 comprising a number of LED indicators connected in a given pattern in the normal way.

Block 27 is also connected to three pressure switches (34, 35, 36) for indicating the water level on the appliance. These consist of ordinary switches which close when reached by the water level and are arranged at three different heights corresponding, for example, to a tub containing 10, 15 or 20 litres of water. Pressure switches 34, 35 and 36 are grounded at one end and connected at the other to block 27. This is connected to one end of negative temperature coefficient resistor 37 the other end of which is grounded and which serves for detecting the temperature of the water in the appliance. Switch 38, which is grounded at one end and connected at the other to block 27, is activated by a fast self-diagnosis operation on the appliance while switch 39, for detecting water in the tub on the appliance, is grounded at one end and connected at the other to block 27. The latter is then connected over five-connection line 40 to block 41 which regulates the speed of motor 42 controlling rotation of the basket on the washing machine. Block 41 is connected to motor 42 over eight-connection line 43. Control logic block 27 is connected over fifteen-connection line 44 to power control unit 25 which is connected over two-connection line 46 to heating resistor 45, over two-connection line 48 to drain pump 47 and over wires 53, 54, 55 and 56 to four electrovalves 49, 50, 51 and 52 respectively. A common wire (57) connects the other ends of the electrovalves to unit 25 which is connected over three-wire line 59 to a safety device for locking door 60 and detecting it has been closed properly. A three-wire supply line (61) then connects unit 25 to regulating block 41.

Number 65 in Fig. 2 indicates a microprocessor, e.g. an MK 3870. This has a first group (66) of inputs and outputs con-

- 5 -

0068267

nected via decoder 67 to the control of indicator columns 32.
These are connected to the outputs of two gate groups (68,
69) which receive consent signals (70 and 71 respectively)
from decoder 72 assembled between output group 73 on microprocessor 65 and connecting line 28 to button panel 29.
Output group 73 is also connected to decoder 75 for controlling indicator rows 32.

Gate group 68 receives signals from connecting line 76, which
picks up operating signals relative to actuators 45, 47, 49,
50, 51, 52 and 60 from power control group 25; connecting
line 77 from pressure switches 34, 35 and 36 and connecting
line 78 from threshold comparator 79 whose inverting input
is connected to a resistive divider (80) between a +5V supply terminal and ground and whose non-inverting input is con
nected to switch 39.

Resistor 37 is connected to the non-inverting input of thresh
old comparator 81 which is also connected, via resistor 82,
to a +14.5V supply terminal. The inverting input of compara-
tor 81, whose output is connected to input 87 on microprocessor 65, is connected to the output of analogue selector
switch 83. The latter has a number of wires (85) at its input, in this case eight, each connected to the common output of selector switch 83 via normally-open switches numbered
0 to 7. Closing of each switch is controlled by a group of
outputs (84) on microprocessor 65. Each of wires 85 is connected to a divider on reference block 86 on which all the
dividers are connected between a +14.5V supply terminal and ground with decreasing middle point voltages starting from the 0 switch to the switch 7 connection.

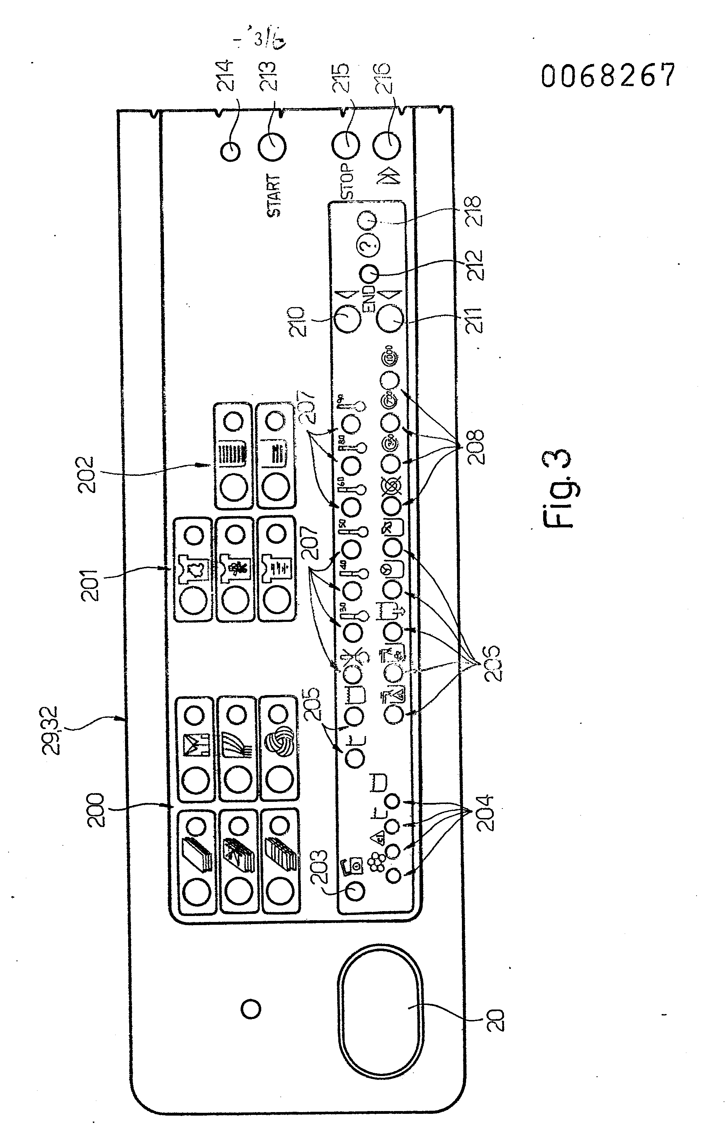

Input 90 on microprocessor 65 is connected to the output of threshold comparator 91 whose inverting input is connected to resistive divider 92, connected between a +5V terminal and ground, and whose non-inverting input is connected to resistive divider 93, connected between a +14.5V terminal and ground. Inputs and outputs 95 on microprocessor 65 are connected to auxiliary memory (RAM) block 96. This has an enabling input (97) which, together with input 98 for gate block 99 and input 100 for zeroing microprocessor 65, is connected to the output of circuit 101 for supplying an output signal whenever the input voltage, usually 14.5V, falls below a preset threshold lower than that of comparator 91, e.g. 7.5V in the case of a 12V threshold on comparator 91. Memory block 96 has a supply input (103) to which a condenser (104) of appropriate capacity is ground connected so as to form an auxiliary supply battery for block 96. Input 103 is also connected to the cathode of diode 105 whose anode is connected to a +8V supply terminal via resistor 106. The anode of diode 105 is connected to that of diode 108 whose cathode is connected to a +5V supply terminal. One wire of connecting line 26 from switch 22 is grounded while the other is connected, via resistor 110, to input 103. Microprocessor 65 has a group of outputs (111) for piloting electrovalves 49, 50, 51 and 52, an output (112) for piloting the lock device on door 60; an output (113) for piloting drain pump 47; an output (114) for piloting heating resistor 45 and an output (115) for piloting a relay on group 25, via gate 99, for supplying power to the various actuators on group 25 itself. A group of outputs (120) on microprocessor 65 is connected, via line 40, to block 41 regulating the speed of motor 42. Fig. 3 shows a control panel on the appliance comprising button panel 29 and indicators 32 next to on/off switch 20. The control panel comprises a first group (200) of buttons (29) assigned to six indicators (32) for selecting the type of fabric being washed; a second group (201) of three buttons (29) assigned to three indicators (32) for selecting the type of dirt and a third group (202) of two buttons (29) assigned to two indicators (32) for selecting the size of the load. The bottom section of the panel is fitted with an indicator (203) for showing the safety lock on door 60 has been activated, a group of operating cycle and function indicators (204, 205, 206), a group of seven water temperature setting indicators (207), a group of four indicators (208) showing the spinning speed setting on motor 42, two buttons (210, 211) for transferring settings to the indicators on groups 207 and 208 respectively, an end-of-cycle indicator (212) and, finally, a breakdown indicator (218). The right-hand side of the panel is fitted with a cycle start button (213) assigned to indicator 214, a cycle stop button (215) and a fast operation button (216) for high-speed performance of a number of operating stages.

As operation of the household appliance shown in Fig. 1 has already been described in detail in the aforementioned patent application, the following description will be limited to operation of the measuring device covered by the present invention and fitted on to the aforementioned appliance. The operating cycles on the appliance are controlled by microprocessor 65 which controls the actuators by means of signals from outputs 111, 112, 113, 114, 115 and 120 and receives correct operation signals from line 76. Microprocessor 65 also controls indicators 32 in the usual way and exchanges data with button panel 29. The operating cycles on the appliance consist of appropriate operating combinations of electro valves 49, 50, 51 and 52, water heating resistor 45, drain pump 47 and motor 42 which regulates the speed of the basket up to spinning speed. The operating cycles are selected by microprocessor 65 on the basis of information supplied by he operator pressing the buttons on groups 200, 201 and 202 in appropriate sequence, followed by operation of cycle start button 213. An indicator on group 207 is then activated according to the set water temperature of the chosen cycle. Microprocessor 65 also receives operating parameter signals, i.e. input 87 receives a signal showing the water temperature detected by resistor 37  as well as signals from pressure switches 34, 35 and 36 showing the level of water in the appliance.

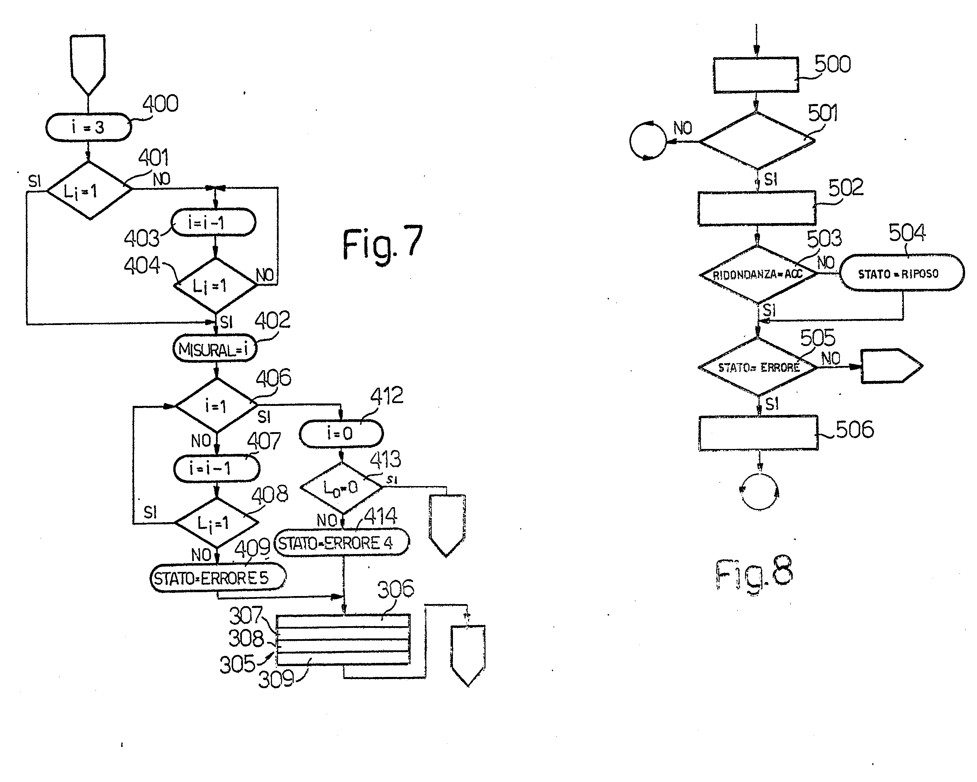

For detecting the temperature of the water in the specific case of Fig. 6, the voltage supplied to the non-inverting input of comparator 81 may, as a result of resistance variations caused by varying temperature on negative temperature coefficient resistor 37, vary between A' and B' depending on the temperature of the water which may range between A and B.

The voltage at the inverting input of comparator 81 may range between $T_0$ and $T_7$ depending on which of switches 0 to 7 has been closed. The values of $T_0$ and $T_7$ are outside the water temperature variation range A' - B'. Switches 0 to 7 are scanned in succession by output group 84 so that, when the voltage level determined by resistor 37 is reached, the level of the logic signal at the output of comparator 81 is switched and the temperature of the water sent to microprocessor 65. This then uses the information to control heating resistor 45 once the set values have been reached.

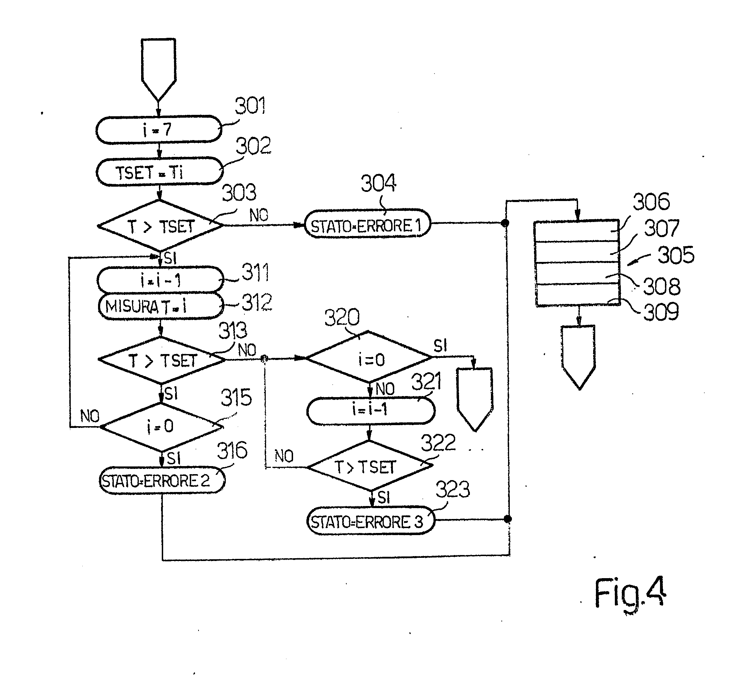

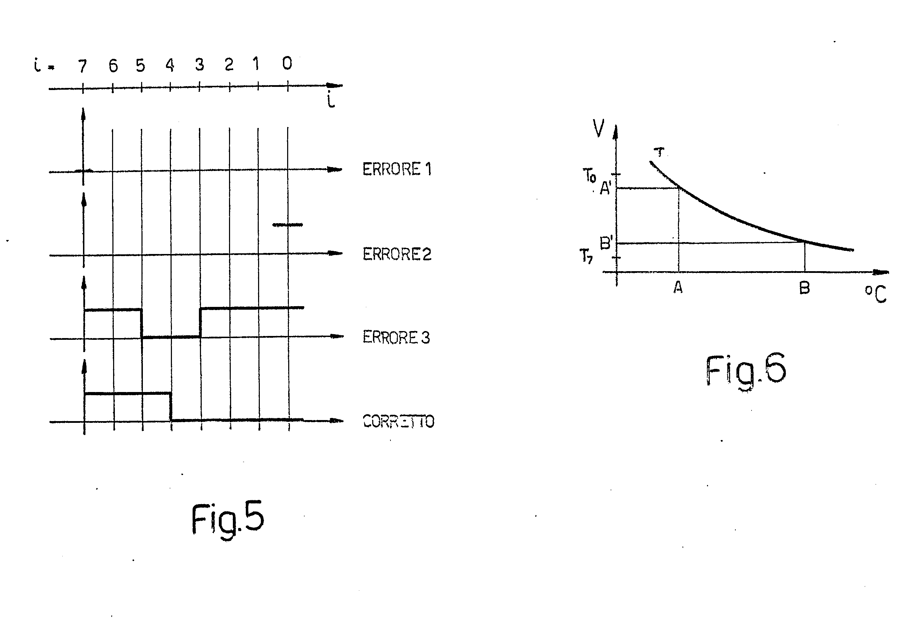

Fig. 4 shows an operating diagram of the temperature measuring device. At each measuring cycle, repetition of which is controlled by microprocessor 65, we arrive at block 301 which makes parameter $i$ equal to 7. From there, we move on to block 302 which causes scanner 83 to transfer the voltage corresponding to closing of switch $i$ to the non-inverting input of comparator 81. This brings us to block 303 which, by picking up the output value of comparator 81, detects whether the voltage supplied by resistor 37 is higher than that supplied by selector switch 83. If it is not, this means there is a breakdown somewhere in that B', under normal conditions, cannot be higher than $T_7$. In this case, the fault either lies on comparator 81 or selector switch 83 or is caused by a short-circuit on resistor 37. This therefore brings us to block 304 which loads the status register with a fault 1 condition consisting of an appropriate combination of bits indicating the aforementioned type of fault on the measuring device. As shown in Fig. 5, this breakdown condition exists when, for $i = 7$, the signal at the output of comparator 81 is at logic level O. From block 304, we move on to block 305 a first section of which (306) controls a special arrangement of indicators 32, determined by fault condition 1, so as to display the type of breakdown involved. A second section (307) memorises the fault condition and code in memory block 96; a third section (308) stops the main programme on microprocessor 65 while a fourth section (309) supplies a signal from output 115 for opening a relay on group 25 and so cut of power supply to the actuators on the appliance. If, on the other hand, the comparison made by block 303 proves affirmative, we move on to block 311 which brings us to the next switch down and therefore to block 312. This loads the MEAS register with the new "i" value corresponding to the voltage selected by the divider on block 86 and relative to the said next switch down (6) and which, in Fig. 6, corresponds to a given temperature on curve T. This brings us to block 313 which, by evaluating the level of the output sig-

nal on comparator 81, calculates whether the voltage at the
non-inverting input is higher than that at the inverting input. If it is, we move on to block 315 which calculates whe-
ther $i = 0$ and, if it is not, we move back to block 311. A
positive confrontation means there is a breakdown somewhere
in that, despite all the switches from 0 to 7 having been
scanned, $T_0$ (Fig. 6) has risen higher than A'. The fault may
either lie on comparator 81 or selector switch 83 or be caused
by a short-circuit on resistor 37.

As shown in Fig. 5, though $i = 0$, the logic signal at the output of comparator 81 is still equal to 1. This therefore brings
us to block 316 which loads the appliance status register with
a fault 2 condition indicating the fault code and, from there,
to block 305 which operates as already described. If, on the
other hand, the scanning operation performed by selector 83
shows the voltage threshold determined by resistor 37 has
been exceeded, the value selected by block 313 switches to
negative and we move on to block 320 which evaluates whether
$i = 0$. If it does not, we move on to block 321 which brings
us to the next "i" down and, from there, to block 322 which
evaluates whether the signal at the non-inverting input is
higher than that at the inverting input. If it is, this means
there is a breakdown somewhere in that, as shown in Fig. 5,
the signal level at the output of comparator 81 has once
more switched from 0 to 1, possibly as a result of a fault
on block 86 or selector 83. This therefore brings us to block

0068267

323, which loads the status register with a fault 3 condition indicating this type of fault and, from there, to block
305. If, on the other hand, the block 322 confrontation
proves negative, we move on to block 320. When i = 0, this
means all the switches on selector 83 have been scanned with
no fault being found on the measuring device. The signal at
the output of comparator 81 is therefore at logic level 1 to
begin with, switches only once to 0 at the temperature indi-
cated by register 37 and stays at logic level 0 as illustrated in Fig. 5. This brings us to the end of the measuring
cycle in which the temperature of the water is as determined
by block 312. Microprocessor 65, of course, can repeat the
Fig. 4 cycle until the measured temperature corresponds to
the one set for preset control of heating resistor 45.

Fig. 7 shows essentially the same diagram as Fig. 4 for de-
tecting the water level in the tub via pressure switches 34,
35 and 36 with automatic switch operating control.

Assuming switches 34, 35 and 36 are closed and supply a logic level 1 signal when the water level reaches them, and
that microprocessor 65 detects the values of the switches in
sequence working downwards and that, after these three scan-
ning operations, detects a 0 logic level reference signal,
the scanning cycle brings us to block 400, which makes i = 3
and, from there, to block 401 which checks $l_i = 1$, that is,
pressure switch 36 on top is closed. If it is, we move di-
rectly on to block 402 which loads the MEAS register with the
"i" value indicating the detected water level. If it is not,

we move on to block 403, which makes i = i - 1 and, from there, to block 404 which checks whether the next pressure switch is supplying a logic level 1 signal. If it is, we move on to block 402 and, if it is not, back to block 403. After ascertaining which pressure switch nearest the top has been closed by the water level and recording it in block 402, we move on to block 406 which checks i = 1. If it does not, i.e. the pressure switch that has been closed is the second or third, we move on to block 407, which decreases the value of "i" and, from there, to block 408 which checks whether the logic signal from the pressure switch below the closed one is also at logic level 1. If it is not, this means there is a breakdown somewhere and we move on to block 409, which loads the status register with a fault 5 condition consisting of a combination of bits showing the type of fault involved and, from there, to block 305, already described in connection with Fig. 7, which, via sections 306, 307, 308 and 309, activates indicators 32 soas to show the type of fault involved, memorises the fault status and code in memory block 96, stops the main programme on microprocessor 65 and opens the relay supplying the actuators on power group 25.

If, on the other hand, the check made by block 408 proves affirmative, we move on to block 406 which, after ascertaining the positive outcome of the check, brings us to block 412, which makes i = 0 and, from there, to block 413 which checks whether the logic signal detected as being at 0 by the scanner in the reference scanning operation is really at 0.

If it is, we move to the output of the level scanning programme. If it is not, this means there is a breakdown somewhere and we move on to block 414, which loads a fault 4 condition into the status register and, from there, to block 305 which has already been described. As shown in Fig. 2, memory block 96 is supplied by condenser 104 when supply voltage is cut off in that only by purposely opening switch 20 can switch 22 be closed so as to short-circuit condenser 104. The fault status and code loaded into memory block 96 in the event of a breakdown, as we have see, on the temperature or water level measuring device is preserved in memory block 96 even in the event of a temporary power cut. That is, when power is cut off, a signal is generated at input 90 on microprocessor 65 at a first threshold so that all the data for completing the status is loaded into memory block 96 together with a bit calculated together with the bits already stored in the memory. When supply voltage drops below a second thresh old, circuit 101 prevents any further data from being loaded into memory block 96 which is thus left unchanged. When power is restored (Fig. 8), block 500 makes a diagnostic check of the ROM memory on microprocessor 65 which brings us to block 501. If the ROM memory is defective, we move on to a closed fault programme and, if it is working properly, to block 502 which reads the data in memory block 96 and recalculates the stored data to make sure, in block 503, that the data calculated in the ACC register corresponds with the data calculated prior to power failure and stored in block 96 in the redundancy register. If it does not correspond, we move on to block 504

0068267

which loads an idle condition into the status register as
this means on/off switch 20 has been opened in the meantime.
If it does correspond, however, we move on to block 505 which
checks to see whether a fault condition has been stored in
the status register. If it has not, the programme is cont-
nued as described in the patent application mentioned previously. If it has, however, we move on to block 506 which
resets fault indicators 32, stops the programme on microprocessor 65 and keeps the actuator supply relay open.
The advantages of the present invention will be clear from
the description given, in particular, the possibility of controlling operation of the measuring device automatically by
providing for a preset range within which detected parameter
values may vary and for detecting that the said values stay
within the given range so as to prevent any possibility of
their being altered during intermediate measuring stages.
An indication is therefore given not only of a fault on the
measuring device but also of the type of fault which is even
preserved in the event of temporary power failure.
To those skilled in the art, it will be clear that changes
may be made to the device described by way of a non-limiting
example without, however, departing from the scope of the
present invention. For example, it may be used for detecting
parameters other than those described or fitted on to other
types of household appliances, e.g. a dish-washing machine.

Dr. Ing. Roberto PRATO

## CLAIMS

1) - Device for measuring at least one operating parameter on a household appliance, characterised by the fact that it comprises first means (37, 83, 86, 81; 34, 35, 36) for detecting the said parameter within a given preset range and second means (65) for detecting a sequence of indications picked up within the said preset range for so detecting a possible breakdown on the said device.

2) - Device according to Claim 1, characterised by the fact that the said first means comprise at least a first element (37) for supplying a first signal indicating the value of the said parameter and means (81) for comparing the said first signal with a number of second signals within at least the said range for obtaining the said sequence of indications.

3) - Device according to Claim 2, characterised by the fact that the said first element (37) supplies an analogue signal.

4) - Device according to Claim 3, characterised by the fact that the said first element (37) comprises a negative temperature coefficient resistor for supplying a signal indicating a temperature value.

5) - Device according to Claims 2 to 4, characterised by the fact that the said comparing means comprise a comparator (81) which receives the said first signal and the said second signals one at a time via a scanning device (83).

6) - Device according to Claim 5, characterised by the fact that the said scanning device (83) picks up the said second signals from a corresponding number of resistive dividers (86).

7) - Device according to Claim 5 or 6, characterised by the fact that the said scanning device (83) is controlled by digital signals.

8) - Device according to Claims 2 to 6, characterised by the fact that the limit values of the said second signals are outside the said range.

9) - Device according to Claim 1, characterised by the fact that the said first means comprise a number of first elements (34, 35, 36) for supplying a corresponding number of first signals indicating the value of the said parameter and varying within the said preset range.

10) - Device according to Claim 9, characterised by the fact that the said first elements supply a digital signal.

11) - Device according to Claim 10, characterised by the fact that the said first elements comprise switches and pressure switches indicating a water level.

12) - Device according to any one of the previous Claims, characterised by the fact that the said second means (65) comprise a microprocessor.

13) - Device according to Claim 12, characterised by the fact that the said microprocessor also controls the operating cycles on the said household appliance.

14) - Device according to any one of the previous Claims, characterised by the fact that the said second means comprise

- 18 -

0068267

means (303, 313, 315, 320, 322; 401, 406, 408, 413) for ascertaining, via the said sequence of indications, that the value of the said parameter falls within the limits of the said range and that the said range is divided into two sets of values, one lower and one higher than the said parameter value.

15) - Device according to Claim 14, characterised by the fact that, in the event that said check is not successfull, the said means indicate a breakdown on the said device.

16) - Device according to Claim 15, characterised by the fact that the said breakdown indication is sent to display means (32).

17) - Device according to Claim 15 or 16, characterised by the fact that the said breakdown indication is memorised in an auxiliary memory (96) protected against temporary power fa.lure.

18) - Measuring device according to any one of the previous Claims, characterised by the fact that the said household appliance is a washing machine.

19) - Household appliance characterised by the fact that it comprises a measuring device according to any one of Claims 1 to 18.

Dr. Ing. Roberto PRATO

Fig. 1

Fig. 2

0068267

- 2/6

Fig. 3

i = 7 301

TSET = Ti 302

303 T > TSET  NO → STATO=ERRORE 1 304

SI

i = i - 1 311

MISURA T = i 312

313 T > TSET  NO →  320 i = 0  SI

SI

315 i = 0

NO

SI

STATO=ERRORE 2 316

321 NO  i = i - 1

322 T > TSET  SI → STATO=ERRORE 3 323

NO

306
307
305
308
309

Fig.4

0068267

Fig.5

Fig.6

0068267

Fig.7

Fig.8

9/9

0068267

European Patent
Office

**EUROPEAN SEARCH REPORT**

0068267

Application number

EP 82 10 5193

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 195 500 (H. TOBITA et al.) <br> * Abstract * <br><br> --- | 1 | D 06 F 33/02 <br> A 47 L 15/46 <br> G 05 B 23/02 |
| A | DE-A-2 818 286 (BAUKNECHT) <br> * Claim 1 * <br><br> ----- | 1 | |

TECHNICAL FIELDS
SEARCHED (Int. Cl. ³)

A 47 L
D 06 F
G 05 B

The present search report has been drawn up for all claims

| Place of search THE HAGUE | Date of completion of the search 25-08-1982 | Examiner MIELKE W |
|---|---|---|